(19) Europäisches Patentamt

European Patent Office

Office européen des brevets

(11) **EP 1 360 103 B1**

(12) **EUROPÄISCHE PATENTSCHRIFT**

(45) Veröffentlichungstag und Bekanntmachung des Hinweises auf die Patenterteilung:
**09.08.2006 Patentblatt 2006/32**

(21) Anmeldenummer: **02712896.6**

(22) Anmeldetag: **06.02.2002**

(51) Int Cl.:
*B62D 6/00* *(2006.01)*   *B62D 5/00* *(2006.01)*
*B62D 101/00* *(2006.01)*   *B62D 111/00* *(2006.01)*
*B62D 113/00* *(2006.01)*   *B62D 121/00* *(2006.01)*
*B62D 137/00* *(2006.01)*

(86) Internationale Anmeldenummer:
**PCT/EP2002/001209**

(87) Internationale Veröffentlichungsnummer:
**WO 2002/062646 (15.08.2002 Gazette 2002/33)**

(54) **VERFAHREN ZUR POSITIONSREGELUNG EINES ELEKTRISCHEN ANTRIEBS UND ZUM LENKEN EINES KRAFTFAHRZEUGS MIT EINER STEER-BY-WIRE-LENKUNG**

METHOD FOR POSITION REGULATION OF AN ELECTRIC DRIVE AND FOR STEERING A MOTOR VEHICLE BY MEANS OF A STEER-BY-WIRE SYSTEM

PROCEDE POUR LA REGULATION DE POSITION D'UN ENTRAINEMENT ELECTRIQUE ET POUR LE GUIDAGE D'UN VEHICULE AUTOMOBILE PAR UN SYSTEME DE DIRECTION PAR CABLES

(84) Benannte Vertragsstaaten:
**DE ES FR GB IT SE**

(30) Priorität: **06.02.2001 DE 10105154**

(43) Veröffentlichungstag der Anmeldung:
**12.11.2003 Patentblatt 2003/46**

(73) Patentinhaber:
• **ROBERT BOSCH GMBH**
  **70469 Stuttgart (DE)**
• **ZF Lenksysteme GmbH**
  **73527 Schwäbisch Gmünd (DE)**

(72) Erfinder:
• **CAO, Chi-Thuan**
  **70825 Korntal (DE)**
• **BLESSING, Petra**
  **74080 Heilbronn (DE)**

(56) Entgegenhaltungen:
**DE-A- 10 018 191**   **DE-A- 19 912 169**
**DE-C- 19 541 749**   **DE-C- 19 616 437**

EP 1 360 103 B1

**Beschreibung**

Stand der Technik

Die Erfindung betrifft ein Verfahren zum Lenken eines Kraftfahrzeugs mit einer Steer-by-Wire-Lenkung nach dem Anspruch 1.

In den verschiedensten Bereichen der Technik muss die Position elektrischer Antriebe geregelt werden. Beispiele hierfür sind die elektrischen Antriebe von Werkzeugmaschinen und Fertigungsrobfltern, aber auch die Ventilaktuatoren von Steer-by-Wire-Lenkanlagen mit Hydro-Lenkgetriebe.

Allen diesen Positionsregelungen ist gemeinsam, dass die Position des elektrischen Antriebs mit möglichst geringer Zeitverzögerung und ohne Überschwingen dem vorgegebenen Sollwert folgen soll. Außerdem ist es erwünscht, dass die Positionsregelung mit einer möglichst geringen zahl an Sensoren auskommt und überdies ein robustes und gegenüber internen und exzernen Störgrößen unempflindliches Regelverhalten aufweist.

Im Folgenden wird am Beispiel eines Ventilaktuators einer sogenannten Steer-by-Wire-Lenkanlage mit Hydro-Lenkgetriebe das erfindungsgemäße Verfahren zur Positionsregelung erläutert.

Steer-by-wire-Lenkungen zeichnen sich dadurch aus, dass keine durchgehende mechanische Verbindung zwischen Lenkrad und den gelenkten Rädern vorhanden ist.

Bei der Realisierung von Steer-by-Wire-Lenkungen sind zwei Aufgabenkomplexe zu bewaltigen. Erstens muss der Fahrerlenkwunsch vom Lenkrad auf die gelenkten Räder übertragen werden und zweitens muss der Fahrer eine Rückmeldung von den gelenkten Rädern am Lenkrad erhalten. Diese Rückmeldung spürt der Fahrer als ein vom Lenkrad auf ihn wirkendes Drehmoment. Sie wird im Folgenden als Lenkgefühl bezeichnet.

Dabei muß eine Steer-by-Wire-Lenkung bezüglich Funktionssicherheit und Regelverhalten mindestens ebenso gut wie eine konventionelle Servolenkung sein Darüber hinaus sollen übergeordnete Funktionen, wie z. B. Spurführungs- oder Fahrdynamikregelung und Seitenwind-Kompensation, in die Steer-by-Wire-Lenkung integrierbar sein. Schließlich soll eine Steer-by-Wire-Lenkung einfach an verschiedene Fahrzeugtypen adaptierbar sein.

Aus der DE 199 12 169 A1 ist eine steer-by-wire-Lenkung bekannt, bei der die Stellung der gelenkten Räder in Abhängigkeit eines von einer Steuereinrichtung vorgegebenen sollwerts geregelt wird und gleichzeitig an die Steuereinrichtung ein Rückstellmoment in Abhängigkeit der auf den elektrischen Annrieb wirkenden Kräfte oder Momente erzeugt wird.

Der Erfindung liegt die Aufgabe zugrunde, Verfahren zur Positionsregelung, insbesondere zum Lenken eines Kraftfahrzeugs mit einer Steer-by-Wire-Lenkung, bereitzustellen, welche eine hohe Regelgüte aufweisen, sicher und zuverlässig arbeiten und die Integration übergeordneter Funktionen erlaubt.

Diese Aufgabe wird erfindungsgemäß gelöst durch ein Verfahren zum Lenken eines Kraftfahrzeugs mit einer Steer-by-Wire-Lenkung nach dem Anspruch 1.

Vorteile der Erfindung:

Bei diesem Verfahren werden die Regelgüte und die Funktionssicherheit verbessert, da die Regelung der Stellung der gelenkten Räder und des Lenkradmoments getrennt erfolgen. Diese Struktur unterstützt die Umsetzung des Verfahrens in eine modular aufgebaute Software. Außerdem können übergeordnete Funktionen einfach integriert werden und die Adaption an verschiedene Fahrzeuge wird vereinfacht.

Bei einer Ergänzung des erfindungsgemäßen Verfahrens ist vorgesehen, dass im ersten Regler die Regeldifferenz $\delta_{LR,soll}$ - $\delta_{Ritzel}$ in Abhängigkeit des Drehwinkels $\delta_{Ritzel}$ des Ritzels im Bereich der Mittellage des Ritzels verstärkt wird, und dass das Produkt aus Regeldifferenz $\delta_{LR,soll}$ - $\delta_{Ritzel}$ und Verstärkung in einem Integrator zu dem ersten Sollwert $\delta_{VA,soll,1}$ aufintegriert. Dadurch kann die Regeldifferenz in der Mittellage der Lenkung erhöht werden, wodurch sich die Stellgröße des Lenkungsreglers erhöht und somit die Lenkung empfindlich auf kleine Änderungen des Fahrerlenkwunsches um die Mittelstellung des Lenkrades bzw. der gelenkten Räder reagiert.

Bei einer weiteren erfindungsgemäßen Variante ist vorgesehen, dass der Motorregler als Kaskadenregler mit einem Führungsregler und mindestens einem Folgeregler ausgeführt ist, und dass die Regeldifferenz des Führungsreglers aus dem Sollwert und dem Ist-Wert eines Drehwinkels des Ventilaktuators gebildet wird.

Insbesondere ist vorgesehen, dass der Führungsregler ein Positionsregler ist, und dass die Stellgröße des Führungsreglers eine Solldrehzahl des Ventilaktuators ist, dass die Regeldifferenz eines als Drehzahlregler ausgebildeten ersten Folgereglers aus der Solldrehzahl und der Ist-Drehzahl des Ventilaktuators gebildet wird, dass die Stellgröße des Drehzahlreglers ein Solldrehmoment des Ventilaktuators ist, und/oder dass aus dem Sollmoment über eine Momenten-Strom-Kennlinie ein Sollstrom des Ventilaktuators gebildet wird, dass die Regeldifferenz eines als Momentenreglers ausgebildeten zweiten Folgereglers aus dem Sollmoment und dem Ist-Moment des Ventilaktuators gebildet wird, und/oder dass die Regeldifferenz eines als Stromregler ausgebildeten dritten Folgereglers aus dem Soll-Strom und dem Ist-Strom des Ventilaktuators gebildet wird, und dass der Stromregler über einen Umrichter den Ventilaktuator ansteuert.

Durch den Einsatz eines Kaskadenreglers wird die Regelgüte dahingehend verbessert, dass das Ansprechverhalten der Regelung verbessert wird, ohne dass es dabei zu einem Übersteuern der gelenkten Räder kommt.

Weitere Ergänzungen des erfindungsgemäßen Verfahrens sehen vor, dass von der Stellgröße $M_{soll}$ des Führungsreglers eine erste Störgröße $M_{stör,1}$ subtrahiert wird, und dass die erste Störgröße nach der folgenden Gleichung berechnet wird:

$$M_{stör,1} = C_{Drehstab} \times (\delta_{Ritzel} - \delta_{VA,ist}),$$

wobei $C_{Drehstab}$ die Torsionsfederrate des Drehstabventils ist.

Durch diese Störgrößenaufschaltung wird die durch den Drehstab verursachte Schwingung kompensiert und die Regelung reagiert noch schneller und genauer auf Änderungen des Fahrerlenkwunsches.

Die Regelgüte kann weiter verbessert werden dadurch, dass von der Stellgröße $M_{soll}$ des Führungsreglers ein Dämpfungsmoment $M_{dämpf}$ subtrahiert wird und dass das Dämpfungsmoment $M_{dämpf}$ nach der folgenden Gleichung berechnet wird:

$$M_{dämpf} = D \times (\omega_{Ritzel} - \omega_{VA,ist})$$

Dabei stellen D eine Konstante und $\omega$ eine Drehgeschwindigkeit dar.

Bei weiteren Ergänzungen des erfindungsgemäßen Verfahrens erfolgt die Sollwertbildung der Stellung der gelenkten Räder geschwindigkeitsabhängig und/oder wird dem Lenkradwinkel von einem Spurführungsregler ein erster Korrekturwinkel in Abhängigkeit eines Kurslenkradwinkels überlagert, und/oder wird dem Lenkradwinkel von einem Fahrdynamikregler ein zweiter Korrekturwinkel in Abhängigkeit der Fahrgeschwindigkeit, der Querbeschleunigung und/ oder der Gierrate des Fahrzeugs überlagert, so dass das Lenkverhalten und die Fahrstabilität eines mit einer erfindungsgemäßen Steer-by-Wire-Lenkung ausgerüsteten Fahrzeugs verbessert werden und das Fahrverhalten eines mit einer konventionellen ServoLenkung ausgerüsteten Fahrzeugs übertrifft. Zusätzlich kann z. B. auch noch eine Seitenwind-Kompensation erfolgen.

Eine weitere Ausgestalung des erfindungsgemäßen Verfahrens sieht vor, dass das Lenkradmoment in Abhängigkeit der Differenz aus dem Drehwinkel des Ventilaktuators und dem Ritzelwinkel gebildet wird, oder dass das Lenkradmoment in Abhängigkeit des Ist-Stroms des Ventilaktuators geregelt wird,so dass auf einen Momentensensor verzichtet werden kann.

Die eingangs genannte Aufgabe wird erfindungsgemäß auch gelöst, durch eine Steer-by-Wire-Lenkung eines Fahrzeugs, mit einem Lenkrad, mit einer Lenksäule, mit einem Drehwinkelsensor, mit einem auf die Lenksäule wirkenden Lenkradmotor, mit einem über ein Lenkgetriebe und eine Spurstange auf die gelenkten Räder wirkenden Lenksteller und mit einem Steuergerät nach Anspruch 19, so dass die Vorteile des erfindungsgemäßen Verfahrens auch bei der erfindungsgemäßen Steer-by-Wire-Lenkung zum Tragen kommen.

Weitere Vorteile und vorteilhafte Ausgestaltungen der Erfindung sind der nachfolgenden Zeichnung, deren Beschreibung und den Patentansprüchen entnehmbar.

Zeichnung

Es zeigen:

Fig. 1    eine schematische Darstellung eines Ausführungsbeispiels einer Steer-by-Wire-Lenkung,

Fig. 2    ein Blockschaltbild eines Ausführungsbeispiels eines erfindungsgemäßen Verfahrens,

Fig. 3    ein Blockschaltbild einer ersten Ergänzung des erfindungsgemäßen Verfahrens und

Fig. 4    ein Blockschaltbild einer zweiten Ergänzung des erfindungsgemäßen Verfahrens.

Beschreibung der Ausführungsbeispiele

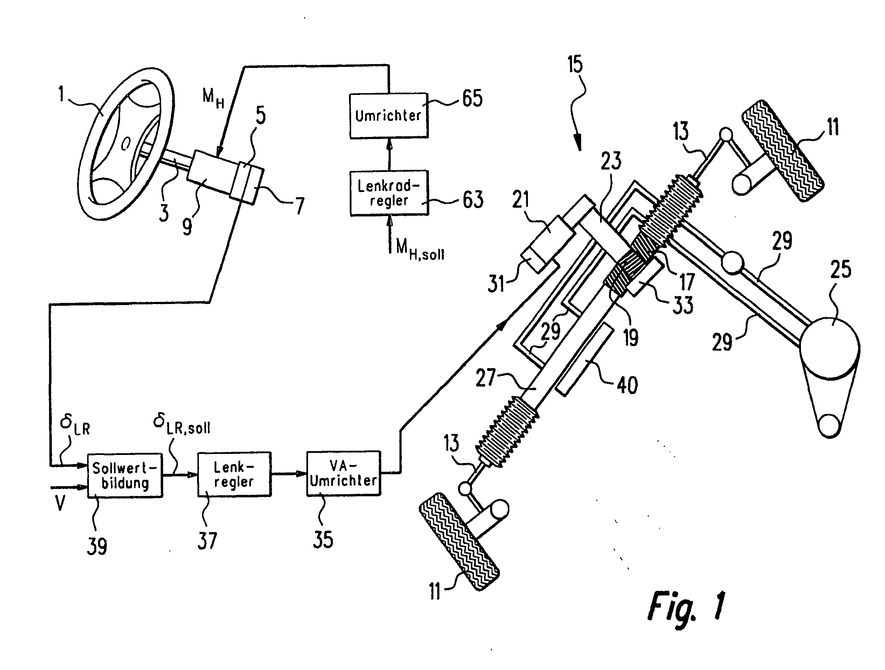

In Figur 1 ist ein Lenkrad 1 mit einer Lenksäule 3 einer erfindungsgemäßen Steer-by-Wire-Lenkung dargestellt. An der Lenksäule 3 sind ein erster Drehwinkelsensor 5, ein zweiter Drehwinkelsensor 7 und ein elektrischer Lenkradmotor 9 angeordnet.

Die gelenkten Räder 11 des in Figur 1 nicht dargestellten Kraftfahrzeugs sind über eine Spurstange 13 miteinander verbunden und werden von einem Lenksteller 15 gelenkt. Der Lenksteller 15 basiert auf einem an sich bekannten Hydro-Lenkgetriebe. Das Lenkgetriebe des Lenkstellers 15 ist als Zahnstangenlenkgetriebe mit einer Zahnstange 17 und einem Ritzel 19 ausgebildet. Bei herkömmlichen Lenkungen wird das Ritzel 19 von der Lenksäule 3 angetrieben. Bei der erfindungsgemäßen Steer-by-Wire-Lenkung wird das Ritzel 19 von einem elektrischen Ventilaktuator 21 angetrieben. Zwischen dem Ventilaktuator 21 und dem Ritzel 19 ist ein Drehstabventil 23 angeordnet. Das Drehstabventil 23 steuert die Servounterstützung des Lenkstellers 15, indem es eine hydraulische Verbindung zwischen einer Förderpumpe 25 und einem in Fig. 1 nur andeutungsweise dargestellten, doppelt wirkenden Arbeitszylinder 27 mehr oder weniger freigibt. Der Arbeitszylinder 27 wirkt auf die Spurstange 13. Förderpumpe 25, Drehstabventil 23 und Arbeitszylinder 27 sind über Verbindungsleitungen 29 miteinander verbunden. Am Rotor des Ventilaktuators 21 ist ein dritter Drehwinkelsensor 31 vorgesehen, der den Drehwinkel des Ventilaktuators 21 erfasst. Am Ritzel 19 ist ein vierter Drehwinkelsensor 33 vorgesehen, welcher den Drehwinkel des Ritzels 19 erfasst. Anstelle des Drehwinkelsensors 33 kann auch ein Wegsensor 40 verwendet werden.

In dem Drehstabventil 23 ist ein in Figur 1 nicht erkennbarer Drehstab angeordnet, der sich in Abhängigkeit des vom Ventilaktuator 21 auf das Ritzel 19 übertragenen Moments verdreht. Die Torsion des Drehstabs wird einerseits zum Ansteuern des Arbeitszylinders 27 im Drehstabventil 23 ausgenutzt, andererseits kann aus einer Winkeldifferenz zwischen dritten Drehwinkelsensor und viertem Drehwinkelsensor auf das vom Ventilaktuator 21 aufgebrachte Moment geschlossen werden. Deshalb kann auch auf einen Drehmomentsensor am Lenksteller 15 verzichtet werden. Ein eventuell vorhandenes Übersetzungsgetriebe zwischen Ventilaktuator 21 und Ritzel 19 muß ggf. berücksichtigt werden.

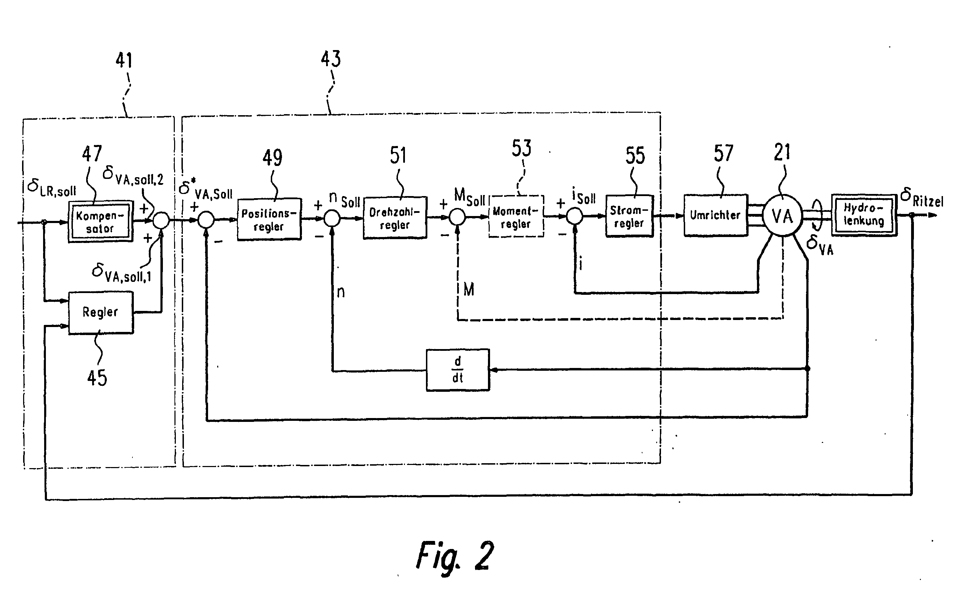

Der Ventilaktuator 21 wird über einen Ventilaktuatorumrichter 35 und einen Lenkregler 37 angesteuert. Führungsgröße des Lenkreglers 37 ist ein Solllenkwert $\delta_{LR,soll}$, der in Abhängigkeit des vom ersten Drehwinkelsensor 5 oder/und des vom zweiten Drehwinkelsensor 7 gemessenen Drehwinkels $\delta_{LR}$ des Lenkrads 1 und bspw. der Fahrgeschwindigkeit des Fahrzeugs gebildet wird. In Figur 2 wird die Regelung des Lenkstellers 15 und der gelenkten Räder 11 im Detail erläutert.

Figur 2 zeigt ein Blockschaltbild einer erfindungsgemäßen Regelung des Lenkstellers. Die Lenkungsregelung besteht aus einem Lenkungsregler 41 und einem Motorregler 43.

Der Lenkungsregler 41 wiederum besteht aus einem Regler 45 und einem Kompensator 47. Der Regler 45 regelt den Drehwinkel $\delta_{Ritzel}$ des Ritzels 19. Führungsgröße des Reglers 45 ist der von einer in Figur 2 nicht dargestellten Sollwertbildung vorgegebener Solllenkradwinkel $\delta_{LR, soll}$. Parallel zum Regler 45 ist ein Kompensator 47 vorgesehen, welcher dazu dient, nicht-lineare Effekte des Lenkstellers 15, insbesondere der Hydrolenkung, zu kompensieren. Aus den Ausgangsgrößen von Regler 45 und Kompensator 47 wird ein Sollwert $\delta^*_{VA, soll}$ gebildet. Dieser Sollwert $\delta^*_{VA,soll}$ ist die Führungsgröße des Motorreglers 43. Der Motorregler 43 ist als Kaskadenregler ausgeführt und weist in dem gezeigten Ausführungsbeispiel einen als Positionsregler ausgebildeten Führungsregler 49, einen als Drehzahlregler ausgeführten ersten Folgeregler 51, optional einen als Momentenregler ausgeführten zweiten Folgeregler 53 und einen als Stromregler ausgeführten dritten Folgeregler 55 auf.

Der Führungsregler 49 hat die Aufgabe, den am Ventilaktuator 21 vom dritten Drehwinkelsensor 31 gemessenen Winkel $\delta_{VA}$ so zu regeln, dass $\delta_{VA}$ dem Sollwert $\delta_{VA, soll}$ ohne Überschwingung folgt. Ausgangsgröße des Führungsreglers 49 ist eine Solldrehzahl $n_{soll}$, welche als Führungsgröße für den ersten Folgeregler 51 dient. Der erste Folgeregler 51 bewertet die Abweichung zwischen Solldrehzahl $n_{soll}$ und der Istdrehzahl n des Ventilaktuators 21, die bspw. aus der zeitlichen Änderung des Drehwinkels $\delta_{VA}$ abgeleitet werden kann. Ausgangsgröße des ersten Folgereglers 51 ist ein Sollmoment $M_{soll}$. Im Fall einer Momentenregelung wird aus der Abweichung zwischen dem Sollmoment $M_{soll}$ und einem am Ventilaktuator 21, wie oben erwähnt, ermittelten Istmoment $M_{ist}$ ein Sollstrom $I_{soll}$ gebildet. Optional kann auch auf den zweiten Folgeregler 53 verzichtet werden und der Sollstrom $I_{soll}$ mit Hilfe einer Momenten-Strom-Kennlinie gewonnen werden.

Anschließend folgt in einem dritten Folgeregler 55 die Stromregelung des Ventilaktuators 21, der dem Sollstrom $I_{soll}$ mit einem am Ventilaktuator 21 gemessenen Iststrom $I_{ist}$ vergleicht und ein Ansteuersignal an einen Umrichter 57 liefert.

Durch die Ausbildung des Motorreglers 43 als Kaskadenregler mit einem vom Führungsregler 49 geregelten Führungsregelkreis und mehreren Folgeregelkreisen wird die Güte der Regelung des Drehwinkels $\delta_{Ritzel}$ verbessert. Bei einer Störung wird durch die zeitlich früher einsetzende Änderung bspw. der Drehzahl n, des Moments M oder des Stroms I über die Folgeregler bereits ein Regelvorgang ausgelöst und somit die Gesamtregelung unterstützt. Dadurch ist es möglich, dass der Drehwinkel $\delta_{Ritzel}$ des Ritzels 19 dem Solllenkradwinkel $\delta_{LR,soll}$ schnell, aber ohne Überschwingung folgt.

In wird die bereits erwähnte Sollwertbildung 39 näher erläutert. Ausgehend von einem Fahrerlenkwunsch, der durch einen Lenkradwinkel $\delta_{LR}$ festgelegt wird, wird der Solllenkradwinkel $\delta_{LR, soll}$ in Abhängigkeit von der Geschwindigkeit v des Fahrzeugs umgewandelt. Damit wird eine geschwindigkeitsabhängige Übersetzung der Drehbewegung am Lenkrad 1 in eine Drehbewegung des Ritzels 19, welche auf die Zahnstange 17 wirkt, ermöglicht.

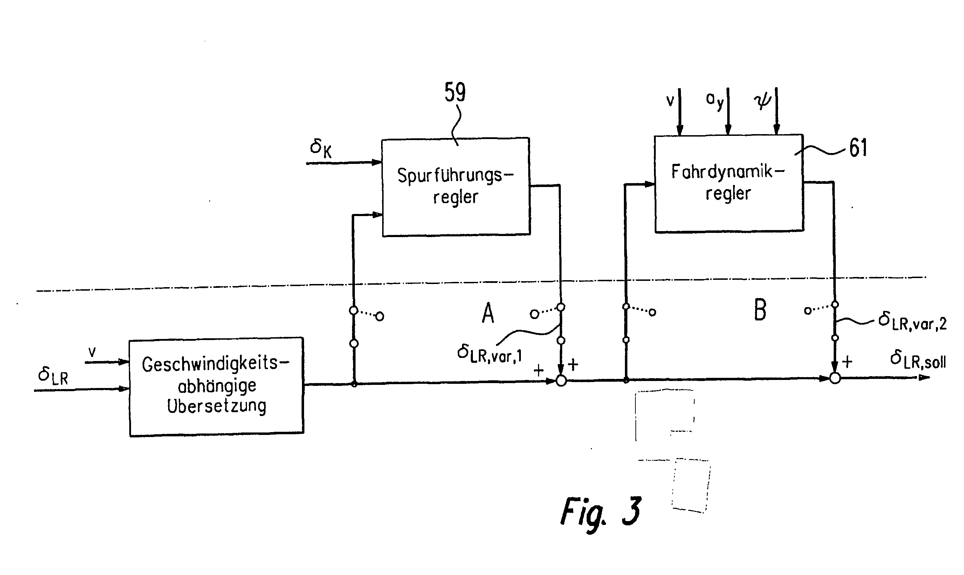

Optional können auch noch weitere übergeordnete Funktionen den Solllenkradwinkel $\delta_{LR,soll}$ beeinflussen. Bspw. ist in Figur 3 ein Spurführungsregler 59 vorgesehen, welcher über eine Schnittstelle A mit der Sollwertbildung verknüpft ist. Der Spurführungsregler 59 überlagert dem Fahrerlenkwunsch $\delta_{LR}$ in Abhängigkeit eines Kurswinkels $\delta_K$ einen ersten Korrekturwinkel $\delta_{LR,var,1}$. Dadurch wird der Solllenkradwinkel $\delta_{LR,soll}$ so beeinflusst, dass das Fahrzeug einem vorgegebenen Kurs folgt bzw. der Fahrer zumindest über das Lenkrad eine Rückmeldung erhält, wenn er von einem vorgegebenen Kurs abweicht.

Eine weitere übergeordnete Funktion ist in einem Fahrdynamikregler 61 implementiert. Abhängig von der Geschwindigkeit v, der Querbeschleunigung ay und der Gierrate des Fahrzeugs wird dem Fahrerlenkwunsch $\delta_{LR}$ ein zweiter Korrekturwinkel $\delta_{LR,var,2}$ überlagert. Aus dem Fahrerlenkwunsch $\delta_{LR}$, der geschwindigkeitsabhängigen Übersetzung und ggf. den ersten Korrekturlenkwinkel $\delta_{LR,var,1}$ und dem zweiten Korrekturwinkel $\delta_{LR,var,2}$ wird der Solllenkradwinkel $\delta_{LR,\,soll}$ gebildet. Dieser Lenkradwinkel $\delta_{LR,soll}$ ist die Eingangsgröße des Reglers 45 aus Figur 2. Selbstverständlich können der Spurführungsregler 59 und der Fahrdynamikregler 61 auch abgeschaltet werden. Es ist außerdem möglich, weitere Funktionen, wie bspw. eine nicht dargestellte Seitenwindkompensation in ähnlicher Weise in der Sollwertbildung zu integrieren.

Die Vorteile der erfindungsgemäßen Steer-by-Wire-Lenkung bestehen unter anderem darin, dass die Realisierung von Motorregelung und Lenkungsregelung überschaubar ist, und dass übergeordnete und nebengeordnete Funktionen einfach und unabhängig voneinander integriert werden können. Mit dieser Struktur ist es möglich, situationsabhängige Sollwerte $\delta_{VA}$ des Ventilaktuators 21 zu erzeugen, die Regler robust und fehlertolerant zu entwerfen und die Lenkregelung gezielt fahreradaptiv und anwendungsfreundlich zu applizieren.

Die Lenkradregelung kann als Regelung oder Steuerung ausgeführt werden. Wie in Figur 1 erwähnt, wird das Sollhandmoment $M_{H,soll}$ mit Hilfe der Winkeldifferenz $\delta_{VA}$-$\delta_{Ritzel}$ ermittelt. Alternativ kann das Sollhandmoment $M_{H,soll}$ auch aus dem Motorstrom $I_{ist}$ des Ventilaktuators 21 ermittelt werden. Bei einer weiteren Alternative kann das Sollhandmoment $M_{H,soll}$ auch über eine Kennlinienschar oder ein Kennfeld (mit fahrzeug- bzw. fahrsituationsabhängigen Parametern) erzeugt werden. Um eine fehlerhafte Ermittlung des Sollhandmoments $M_{H,\,soll}$ zu vermeiden, können beide o.g. Methoden zur Ermittlung des Sollhandmoments parallel angewandt werden und eine gegenseitige Überwachung erfolgen. Das Sollhandmoment wird einem Lenkradregler 63 zugeführt, der über einen Umrichter 65 den Lenkradmotor 9 so ansteuert, dass das Handmoment $M_H$ auf das Lenkrad 1 übertragen wird. Bei der Ausführung des Lenkradreglers 63 wird besonderer Wert auf die Drehmomentenwelligkeit des Lenkradmotors 9 gelegt, damit sich für den Fahrer ein angenehmes Lenkgefühl einstellt.

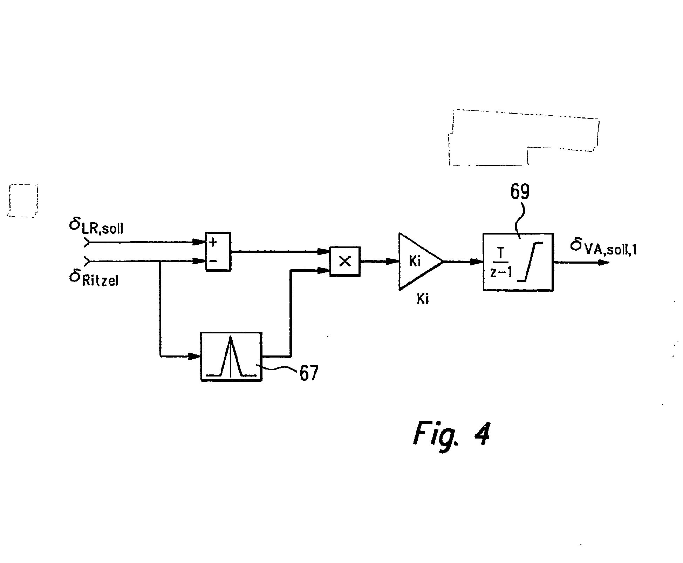

In Fig. 4 ist ein Blockschaltbild eines Ausschnitts des ersten Reglers 45 von Fig. 2 dargestellt. Um ein besonders sensibles Ansprechen der Regelung auf Änderungen des Solllenkradwinkels $\delta_{LR,soll}$, der ein Maß für den Fahrerlenkwunsch darstellt, zu ermöglichen, wird der Drehwinkel des Ritzels $\delta_{Ritzel}$ vor der Bildung der Regeldifferenz $\delta_{LR,soll}$ - $\delta_{Ritzel}$ abgezweigt und in Abhängigkeit des Drehwinkels $\delta_{Ritzel}$ verstärkt. Entsprechend der in Fig. 4 gezeigten Kennlinie 67 ist der Verstärkungsfaktor in der Mittellage der Lenkung bzw. der Lenkhandhabe groß und nimmt symmetrisch zu dieser Mittellage ab. Dieses durch die Kennlinie geänderte Signal wird mit der Regeldifferenz $\delta_{LR,\,soll}$ - $\delta_{Ritzel}$ multipliziert. Anschließend wird dieses Signal einem Verstärker $K_i$ und anschließend einem Integrator 69 zugeführt. Ausgangsgröße des Integrators 69 ist der erste Sollwinkel des Ventilaktuators $\delta_{VA,\,soll,\,1}$.

Durch diese Maßnahme wird das Ansprechverhalten der erfindungsgemäßen Lenkanlage bei Geradeausfahrt verbessert und ein sensibleres Ansprechen der Lenkanlage auch auf kleinste Änderungen des Fahrerlenkwunsches erreicht.

**Patentansprüche**

1. Verfahren zum Lenken eines Kraftfahrzeugs mit folgenden Verfahrensschritten ;

  - Erfassen des Lenkradwinkels ($d_{LK}$) ;
  - Umwandeln des Lenkradwinkels in einen Soll-Wert ($d_{LR\,soll}$) der Stellung der gelenkten Räder (11);
  - Erfassen eines Ist-Werts ($d_{Ritzel}$) der Stellung der gelenkten Räder (11);
  - Bilden einer Regeldifferenz ($d_{LK,\,Soll}$ - $\delta_{Ritzel}$) zwischen Soll-Wert und Ist-Wert der Stellung der gelenkten Räder (11);
  - Regeln der Stellung der gelenkten Räder (11) in Abhängigkeit der Regeldifferenz ($d_{I.R,\,Soll}$ - $\delta_{Riczel}$) ;
  - Regeln eines Lenkradmoments ($M_g$) in Abhängigkeit der zwischen den gelenkten Rädern (11) und einem Lenksteller (15) wirkenden oder über eine Kennlinienschar oder ein Kennfeld erzeugten Momente und/oder Kräfte,

  **dadurch gekennzeichnet, dass** ein erster Regler (45) aus der Regeldifferenz ($d_{LR,\,soll}$ - $\delta_{Ritzel}$) einen ersten Sollwert ($d_{VA\,soll}$ 1) eines Ventilaktuators (21) einer Hydrolenkung als Stellgröße ausgibt, dass parallel zu dem ersten Regler (45) ein Kompensator (47) aus dem Soll-Wert ($d_{LR,\,soll}$) der Stellung der gelenkten Räder (11) einen zweiten Sollwert ($d_{VA,\,soll,\,2}$) des Ventilaktuators (21) als Stellgröße ausgibt, dass erster Sollwert ($d_{VA,\,soll,\,1}$) und zweiter Sdllwert

($d_{VA, soll, 2}$) zu einem Sollwert ($d_{VA. soll}$) des Ventilaktuators (21) addiert werden, und dass der Sollwert ($d_{VA, soll}$) die Führungsgröße eines Motorreglers (43) ist.

2. Verfahren nach Anspruch 1, **dadurch gekennzeichnet, dass** im ersten Regler (45) die Regeldifferenz ($d_{LR, soll}$ - $\delta_{Ritzel}$) in Abhängigkeit des Drehwinkels ($d_{Ritzel}$) des Ritzels im Bereich der Mittellage des Ritzels verstärkt wird, und dass das Produkt aus Regeldifferenz ($d_{LR, soll}$ - $\delta_{Ritzel}$) und Verstärkung in einem Integrator () zu dem ersten Sollwert ($d_{VA, soll, 1}$) aufintegriert wird.

3. Verfahren nach Anspruch 1 oder 2, **dadurch gekennzeichnet, dass** der Motorregler (43) als Kaskadenregler mit einem Führungsregler (49) und mindestens einem Folgeregler (51) ausgeführt ist, und dass die Regeldifferenz des Führungsreglers aus dem Sollwert ($d_{VA, soll}$) und dem Ist-Wert ($d_{VA, ist}$) eines Drehwinkels des Ventilaktuators (21) gebildet wird.

4. Verfahren nach Anspruch 3, **dadurch gekennzeichnet, dass** der Führungsregler (49) ein Positionsregler ist, dass die Stellgröße des Führungsreglers (49) eine Solldrehzahl ($n_{soll}$) des ventilaktuators (21) ist, dass die Regeldifferenz eines als Drehzahlregler ausgebildeten ersten Folgereglers (51) aus der Solldrehzahl ($n_{soll}$) und der Ist-Drehzahl ($n_{rat}$) des Ventilaktuators (21) gebildet wird, und dass die Stellgröße des Drehzahlreglers ein Sollmoment ($M_{soll}$) des ventilaktuators (21) ist.

5. verfahren nach Anspruch 4, **dadurch gekennzeichnet, dass** von der Stellgröße ($M_{soll}$) des Führungsreglers (49) eine erste Störgröße ($M_{stor, 1}$) subtrahiert wird, und dass die erste Störgröße ($M_{stor, 1}$) nach der folgenden Gleichung berechnet wird:

$$M_{Stör, 1} = C_{Drehstab} \times (d_{Ritzel} - \delta_{VA, Ist})$$

Mit:

$C_{Drehstab}$: Torsionsfederrate des Drehstabventils (23)

6. Verfahren nach Anspruch 4 oder 5, **dadurch gekennzeichnet, dass** von der Stellgröße ($M_{soll}$) des Führungsreglers (49) ein Dämpfungsmoment ($M_{Dampf}$) subtrahiert. wird, und dass das Dämpfungsmoment ($M_{Dampf}$) nach der folgenden Gleichung berechnet wird:

$$M_{Dämpf} = D \times (\omega_{Ritzel} - \omega_{VA, Ist})$$

Mit:

D: Konstante
$\omega$: Drehgeschwindigkeit

7. Verfahren nach einem der Ansprüche 4 bis 6, **dadurch gekennzeichnet, dass** die Stellgröße des ersten Folgereglers (51) ein Sollmoment ($M_{soll}$) des Ventilaktuators (21) ist, dass aus dem Sollmoment ($M_{soll}$) über eine Momenten-Strom-Kennlinie ein Sollstrom ($I_{soll}$) des Ventilaktuators (21) gebildet wird.

8. Verfahren nach einem der Ansprüche 4 bis 7, **dadurch gekennzeichnet, dass** die Regeldifferenz eines als Momentenreglers ausgebildeten zweiten Folgereglers (53) aus dem Sollmoment ($M_{soll}$) und dem Ist-Moment (M) des Ventilaktuators (21) gebildet wird.

9. Verfahren nach einem der Ansprüche 7 oder 8, **dadurch gekennzeichnet, dass** die Regeldifferenz eines als Stromregler ausgebildeten dritten Folgereglers (55) aus dem Soll-Strom ($I_{soll}$) und dem Ist-Strom ($I_{lot}$) des Ventilaktuators (21) gebildet wird, und dass der dritte Folgeregler (55) über einen Umrichter (57) den ventilaktuator (21) ansteuert.

10. Verfahren nach einem der vorhergehenden Ansprüche, **dadurch gekennzeichnet, dass** die Sollwertbildung

($d_{LR, soll}$) der Stellung der gelenkten Räder (11) geschwindigkeitsabhängig erfolgt.

11. Verfahren nach einem der vorhergehenden Ansprüche, **dadurch gekennzeichnet, dass** dem Lenkradwinkel ($d_{LR}$) von einem Spurführungsregler (59) ein erster Korrekturwinkel ($d_{LR,var,1}$) in Abhängigkeit eines Kurslenkradwinkels ($d_k$) überlagert wird.

12. Verfahren nach einem der vorhergehenden Ansprüche, **dadurch gekennzeichnet, dass** dem Lenkradwinkel ($d_{LR}$) von einem Fahrdynamikregler (61) ein zweiter Korrekturwinkel ($d_{LR, Var, 2}$) in Abhängigkeit der Fahrgeschwindigkeit (v), der Querbeschleunigung ($a_y$) und/oder der Gierrate des Fahrzeugs überlagert wird.

13. Verfahren nach einem der vorstehenden Ansprüche, **dadurch gekennzeichnet, dass** das Soll-Lenkradmoment ($M_{H, soll}$) in Abhängigkeit der Differenz aus dem Drehwinkel ($d_{VA, Ist}$) des ventilaktuators (21) und dem Ritzelwinkel ($d_{Ritzel, Ist}$) gebildet wird.

14. Verfahren nach Anspruch 13, **dadurch gekennzeichnet, dass** bei der Bildung der Differenz aus dem Drehwinkel ($d_{VA, Ist}$) des Ventilaktuators (21) und dem Ritzelwinkel ($d_{Ritzol, Ist}$) das Übersetzungsverhältnis des Lenkgetriebes berücksichtigt wird.

15. Verfahren nach einem der vorhergehenden Ansprüche, **dadurch gekennzeichnet, dass** das Soll-Lenkradmoment ($M_{M, soll}$) in Abhängigkeit des Ist-Stroms ($I_{ist}$) des Ventilaktuators (21) oder aus einem Kennfeld ermittelt wird.

16. verfahren nach einem der vorhergehenden Ansprüche, **dadurch gekennzeichnet, dass** das Lenkrad-Moment ($M_M$) mit einem Lenkradregler (63) geregelt wird.

17. Computerprogramm, **dadurch gekennzeichnet, dass** es dazu geeignet ist, das Verfahren nach einem der vorstehenden Ansprüche auszuführen.

18. Computerprogramm nach Anspruch 17, **dadurch gekennzeichnet, dass** es auf einem Speichermedium abgespeichert ist.

19. Steuergerät für eine Steer-by-Wire-Lenkung eines Fahrzeugs, mit einem Lenkrad (1), mit einer Lenksäule (3), mit einem Drehwinkelsensor (5), mit einem auf die Lenksäule (3) wirkenden Lenkradmotor (9) und mit einem über ein Lenkgetriebe und eine Spurstange (13) auf die gelenkten Räder (11) wirkenden Lenksteller (15), **dadurch gekennzeichnet, dass** das Steuergerät nach einem Verfahren nach einem der Ansprüche 1 bis 16 arbeitet.

20. Steer-by-wire-Lenkung eines Fahrzeugs, mit einem Lenkrad (1), mit einer Lenksäule (3), mit einem Drehwinkelsensor (5), mit einem auf die Lenksäule (3) wirkenden Lenkradmotor (9), mit einem über ein Lenkgetriebe und eine Spurstange (13) auf die gelenkten Räder (11) wirkenden Lenksteller (15) und mit einem Steuergerät, **dadurch gekennzeichnet, dass** das Steuergerät ein Steuergerät nach Anspruch 19 ist.

21. Steer-by-Wire-Lenkung nach Anspruch 20, **dadurch gekennzeichnet, dass** das Lenkgetriebe ein Hydro-Lenkgetriebe mit einem Drehstabventil (23) ist.

22. Steer-by-Wire-Lenkung nach Anspruch 20 oder 21, **dadurch gekennzeichnet, dass** der Lenkradmotor (9) über ein Getriebe auf das Lenkrad (1) wirkt.

**Claims**

1. Method for steering a motor vehicle having the following method steps:

   - sensing of the steering wheel angle ($\delta_{LR}$);
   - conversion of the steering wheel angle into a setpoint value ($\delta_{LR,setp}$) of the position of the steered wheels (11);
   - sensing of an actual value ($\delta_{pinion}$) of the position of the steered wheels (11);
   - formation of a control difference ($\delta_{LR,setp} - \delta_{pinion}$) between the setpoint value and actual value of the position of the steered wheels (11);
   - control of the position of the steered wheels (11) as a function of the control difference ($\delta_{LR,setp} - \delta_{pinion}$) ;
   - control of a steering wheel torque ($M_H$) as a function of the torques and/or forces acting between the steered wheels (11) and a steering actuator (15) or generated by means of a group of characteristic curves or a characteristic diagram,

**characterized in that** a first controller (45) outputs, on the basis of the control difference ($\delta_{LR,setp}$ - $\delta_{pinion}$), a first setpoint value ($\delta_{VA, setp,1}$) of a value actuator (21) of a hydraulic steering system as a manipulated variable, **in that**, in parallel with the first controller (45), a compensator (47) outputs, on the basis of the setpoint value ($\delta_{LR,setp}$) of the position of the steered wheels (11), a second setpoint value ($\delta vA,setp,2$) of the valve actuator (21) as a manipulated variable, **in that** the first setpoint value ($\delta_{VA, setp,1}$) and second setpoint value ($\delta_{VA, setp, 2}$) are added to form a setpoint value ($\delta_{VA, setp}$) of the valve actuator (21), and **in that** the setpoint value ($\delta_{VA, setp}$) is the guide variable of an engine controller (43).

2. Method according to Claim 1, **characterized in that**, in the first controller (45), the control difference ($\delta_{LR,set}$ - $\delta_{Pinion}$) is amplified as a function of the rotational angle ($\delta_{pinion}$) of the pinion in the region of the central position of the pinion, and **in that** the product of the control difference ($\delta_{LR,setp}$ - $\delta_{pinion}$) and amplification is integrated in an integrator () to form the first setpoint value ($\delta_{VA}$, setp, 1) .

3. Method according to Claim 1 or 2, **characterized in that** the engine controller (43) is embodied as a cascade controller with a guide controller (49) and at least one follow-on controller (51), and **in that** the control difference of the guide controller is formed from the setpoint value ($\delta_{VA,setp}$) and the actual value ($\delta_{VA,act}$) of a rotational angle of the valve actuator (21).

4. Method according to Claim 3, **characterized in that** the guide controller (49) is a position controller, **in that** the manipulated variable of the guide controller (49) is a setpoint rotational speed ($n_{setp}$) of the valve actuator (21), **in that** the control difference of a first follow-on controller (51) which is formed as a rotational speed controller is formed from the setpoint rotational speed ($n_{setp}$) and the actual rotational speed ($n_{act}$) of the valve actuator (21), and **in that** the manipulated variable of the rotational speed controller is a setpoint torque ($M_{setp}$) of the valve actuator (21).

5. Method according to Claim 4, **characterized in that** a first interference variable ($M_{interf,1}$) is subtracted from the manipulated variable ($M_{setp}$) of the guide controller (49), and **in that** the first interference variable ($M_{interf,1}$) is calculated according to the following equation:

$$M_{interf,1} = C_{torsionbar} \times (\delta_{Pinion} - \delta_{VA,act})$$

where:

Ctorsionbar: torsion spring rate of the torsion bar valve (23).

6. Method according to Claim 4 or 5, **characterized in that** a damping torque ($M_{damp}$) is subtracted from the manipulated variable ($M_{setp}$) of the guide controller (49), and **in that** the damping torque ($M_{damp}$) is calculated according to the following equation:

$$M_{damp} = D \times (\omega_{pinion} - \omega_{VA,act})$$

where:

D: constant
$\omega$ : rotational speed

7. Method according to one of Claims 4 to 6, **characterized in that** the manipulated variable of the first follow-on controller (51) is a setpoint torque ($M_{setp}$) of the valve actuator (21), **in that** a setpoint current ($I_{setp}$) of the valve actuator (21) is formed from the setpoint torque ($M_{setp}$) by means of a torque/current characteristic curve.

8. Method according to one of Claims 4 to 7, **characterized in that** the control difference of a second follow-on controller (53) which is formed as a torque controller is formed from the setpoint torque ($M_{setp}$) and the actual torque (M) of the valve actuator (21).

9. Method according to one of Claims 7 or 8, **characterized in that** the control difference of a third follow-on controller (55) which is embodied as a current controller is formed from the setpoint current ($I_{setp}$) and the actual current ($I_{act}$) of the valve actuator (21), and **in that** the third follow-on controller (55) drives the valve actuator (21) by means of a converter (57).

10. Method according to one of the preceding claims, **characterized in that** the formation of setpoint values ($\delta_{LR,\,setp}$) for the position of the steered wheels (11) is carried out as a function of the speed.

11. Method according to one of the preceding claims, **characterized in that** a first correction angle ($\delta_{LR,var,1}$) is superposed on the steering wheel angle ($\delta_{LR}$) by a lane holding controller (59) as a function of a course-steering wheel angle ($\delta_K$).

12. Method according to one of the preceding claims, **characterized in that** a second correction angle ($\delta_{LR,var,2}$) is superimposed on the steering wheel angle ($\delta_{LR}$) by a vehicle movement dynamic controller (61) as a function of the travel speed (v), the lateral acceleration ($a_y$) and/or the yaw rate of the vehicle.

13. Method according to one of the preceding claims, **characterized in that** the setpoint steering wheel torque ($M_{H,\,setp}$) is formed as a function of the difference between the rotational angle ($\delta_{VA,\,act}$) of the valve actuator (21) and the pinion angle ($\delta_{pinion,\,act}$).

14. Method according to Claim 13, **characterized in that** the transmission ratio of the steering gear is taken into account in the formation of the difference between the rotational angle ($\delta_{VA,\,act}$) of the valve actuator (21) and the pinion angle ($\delta_{pinion,act}$).

15. Method according to one of the preceding claims, **characterized in that** the setpoint steering wheel torque ($M_{H,setp}$) is determined as a function of the actual current ($I_{act}$) of the valve actuator (21) or from a characteristic diagram.

16. Method according to one of the preceding claims, **characterized in that** the steering wheel torque ($M_H$) is controlled using a steering wheel controller (63).

17. Computer program, **characterized in that** it is suitable for carrying out the method according to one of the preceding claims.

18. Computer program according to Claim 17, **characterized in that** it is stored on a storage medium.

19. Control device for a steer-by-wire steering system of a vehicle, having a steering wheel (1), having a steering column (3), having a rotational angle sensor (5), having a steering wheel motor (9) which acts on the steering column (3), and having a steering actuator (15) which acts on the steered wheels (11) by means of a steering gear and a track rod (13), **characterized in that** the control device operates according to the method according to one of Claims 1 to 16.

20. Steer-by-wire steering system of a vehicle, having a steering wheel (1), having a steering column (3), having a rotational angle sensor (5), having a steering wheel motor (9) which acts on the steering column (3), having a steering actuator (15) which acts on the steered wheels (11) by means of a steering gear and a track rod (13) and having a control device, **characterized in that** the control device is a control device according to Claim 19.

21. Steer-by-wire steering system according to Claim 20, **characterized in that** the steering gear is a hydraulic steering gear having a torsion bar valve (23).

22. Steer-by-wire steering system according to Claim 20 or 21, **characterized in that** the steering wheel motor (9) acts on the steering wheel (1) by means of a gear mechanism.

**Revendications**

1. Procédé pour diriger un véhicule automobile, comprenant les étapes de procédé suivantes :

- saisie de l'angle de rotation du volant ($d_{LR}$) ;
- conversion de l'angle de rotation du volant en une valeur de consigne ($d_{LR}$ consigne) de la position des roues dirigées (11) ;
- saisie d'une valeur réelle ($d_{pignon}$) de la position des roues dirigées (11) ;
- formation d'une différence de régulation ($d_{LR}$ consigne - $\delta_{pignon}$) entre la valeur de consigne et la valeur réelle de la position des roues dirigées (11) ;
- régulation de la position des roues dirigées (11) en fonction de la différence de régulation ($d_{LR}$ consigne - $\delta_{pignon}$) ;
- régulation d'un couple appliqué au volant ($M_H$) en fonction des couples et/ou forces agissant entre les roues dirigées (11) et un actionneur de direction (15) ou produit(e)s par un réseau des courbes caractéristiques ou un champ de caractéristiques,

**caractérisé en ce qu'**
un premier régulateur (45) émet, à partir de la différence de régulation ($d_{LR}$ consigne - $\delta_{pignon}$), une première valeur de consigne ($d_{VA\ consigne\ 1}$) d'un actionneur de soupape (21) d'une direction hydraulique pour servir de grandeur de réglage, un compensateur (47) émet, parallèlement au premier régulateur (45), à partir de la valeur de consigne ($d_{LR}$ consigne) de la position des roues dirigées (11), une deuxième valeur de consigne ($d_{VA}$ consigne 2) de l'actionneur de soupape (21) pour servir de grandeur de réglage, la première valeur de consigne ($d_{VA}$ consigne 1) et la deuxième valeur de consigne ($d_{VA}$ consigne 2) sont ajoutées à une valeur de consigne ($d'_{VA}$ consigne) de l'actionneur de soupape (21), et la valeur de consigne ($d'_{VA}$ consigne) est la grandeur de référence d'un régulateur du moteur (43).

2. Procédé selon la revendication 1,
   **caractérisé en ce que**
   dans le premier régulateur (45), la différence de régulation ($d_{LR}$ consigne - $\delta_{pignon}$) est amplifiée en fonction de l'angle de rotation ($d_{pignon}$) du pignon au niveau de la position médiane du pignon, et le produit de la différence de régulation ($d_{LR}$ consigne - $\delta_{pignon}$) et de l'amplification est intégré, dans un intégrateur (), à la première valeur de consigne ($dvA$ consigne 1).

3. Procédé selon la revendication 1 ou 2,
   **caractérisé en ce que**
   le régulateur du moteur (43) est un régulateur en cascade comprenant un régulateur pilote (49) et au moins un régulateur suiveur (51), la différence de régulation du régulateur pilote est formée à partir de la valeur de consigne ($d'_{VA}$ consigne) et de la valeur réelle ($d_{VA}$ réelle) d'un angle de rotation de l'actionneur de soupape (21).

4. Procédé selon la revendication 3,
   **caractérisé en ce que**
   le régulateur pilote (49) est un régulateur de position, la grandeur de réglage du régulateur pilote (49) est un régime de consigne ($n_{consigne}$) de l'actionneur de soupape (21), la différence de régulation d'un premier régulateur suiveur (51) réalisé sous la forme d'un régulateur de régime est formée à partir du régime de consigne ($n_{consigne}$) et du régime réel ($n_{réel}$) de l'actionneur de soupape (21), et la grandeur de réglage du régulateur de régime est un couple de consigne ($M_{consigne}$) de l'actionneur de soupape (21).

5. Procédé selon la revendication 4,
   **caractérisé en ce qu'**
   une première grandeur de réglage ($M_{perturb1}$) est soustraite de la grandeur de réglage ($M_{consigne}$) du régulateur pilote (49), et cette première grandeur de réglage ($M_{perturb1}$) est calculée selon l'équation suivante :

$$M_{perturb1} = C_{barre\ de\ torsion} \times (d_{pignon} - \delta_{VA\ réelle})$$

avec
$C_{barre}$ de torsion : raideur du ressort de torsion de la soupape de barre de torsion (23).

6. Procédé selon la revendication 4 ou 5,
   **caractérisé en ce que**
   un couple d'amortissement ($M_{amort}$) est soustrait de la grandeur de réglage ($M_{consigne}$) du régulateur pilote (49), et ce couple d'amortissement ($M_{amort}$) est calculé selon l'équation suivante :

$$M_{amort} = D \text{ x } (\omega_{pignon} - \omega_{VA\ réelle})$$

avec
D : constante
$\omega$ : vitesse de rotation.

**7.** Procédé selon l'une des revendications 4 à 6,
**caractérisé en ce que**
la grandeur de réglage du premier régulateur suiveur (51) est un couple de consigne ($M_{consigne}$) de l'actionneur de soupape (21), et on forme un courant de consigne ($I_{consigne}$) de l'actionneur de soupape (21) à partir du couple de consigne ($M_{consigne}$), par une courbe caractéristique courant-couple.

**8.** Procédé selon l'une des revendications 4 à 7,
**caractérisé en ce que**
la différence de régulation d'un deuxième régulateur suiveur (53) réalisé sous la forme d'un régulateur de couple est formée à partir du couple de consigne ($M_{consigne}$) et du couple réel (M) de l'actionneur de soupape (21).

**9.** Procédé selon l'une des revendications 7 ou 8,
**caractérisé en ce que**
la différence de régulation d'un troisième régulateur suiveur (55) réalisé sous la forme d'un régulateur de courant est formée à partir du courant de consigne (Iconsigne) et du courant réel ($I_{réel}$) de l'actionneur de soupape (21), et le troisième régulateur suiveur (55) actionne l'actionneur de soupape (21) par un convertisseur (57).

**10.** Procédé selon l'une des revendications précédentes,
**caractérisé en ce que**
la formation de la valeur de consigne ($d_{LR\ consigne}$) de la position des roues dirigées (11) s'effectue en fonction de la vitesse.

**11.** Procédé selon l'une des revendications précédentes,
**caractérisé en ce qu'**
un premier angle de correction ($d_{LR\ var\ 1}$) est superposé à l'angle de rotation du volant ($d_{LR}$) d'un régulateur de tenue de cap (59) en fonction d'un angle de rotation du volant court ($d_R$).

**12.** Procédé selon l'une des revendications précédentes,
**caractérisé en ce que**
un deuxième angle de correction ($d_{LR\ var\ 2}$) est superposé à l'angle de rotation du volant ($d_{LR}$) d'un régulateur de dynamique de roulage (61) en fonction de la vitesse de roulage (v), de l'accélération transversale ($a_v$) et/ ou du taux de lacet du véhicule.

**13.** Procédé selon l'une des revendications précédentes,
**caractérisé en ce que**
le couple de consigne appliqué au volant ($M_{R\ consigne}$) est formé en fonction de la différence de l'angle de rotation ($d_{VA}$ réel) de l'actionneur de soupape (21) et de l'angle de pignon ($d_{pignon}$ réel).

**14.** Procédé selon la revendication 13,
**caractérisé en ce que**
lors de la formation de la différence de l'angle de rotation ($d_{VA}$ réel) de l'actionneur de soupape (21) et de l'angle de pignon ($d_{pignon\ réel}$), on prend en compte le rapport de transformation du boîtier de direction.

**15.** Procédé selon l'une des revendications précédentes,
**caractérisé en ce que**
le couple de consigne appliqué au volant ($M_{R}$ consigne) est déterminé en fonction du courant réel (I réel) de l'actionneur de soupape (21) ou à partir d'un champ de caractéristiques.

**16.** Procédé selon l'une des revendications précédentes,
**caractérisé en ce que**
le couple appliqué au volant ($M_R$) est régulé à l'aide d'un régulateur de volant (63).

**17.** Programme informatique,
**caractérisé en ce qu'**
il est destiné à exécuter le procédé selon l'une des revendications précédentes.

**18.** Programme informatique selon la revendication 17,
**caractérisé en ce qu'**
il est enregistré sur un support de mémoire.

**19.** Appareil de commande pour une direction par câbles d'un véhicule, comprenant un volant (1), une colonne de direction (3), un capteur d'angle de rotation (5), un moteur de volant (9) agissant sur la colonne de direction (3) et un actionneur de direction (15) agissant sur les roues dirigées (11) par l'intermédiaire d'un boîtier de direction et d'une barre d'accouplement (13),
**caractérisé en ce que**
l'appareil de commande fonctionne suivant un procédé selon l'une des revendications 1 à 16.

**20.** Direction par câbles d'un véhicule, comprenant un volant (1), une colonne de direction (3), un capteur d'angle de rotation (5), un moteur de volant (9) agissant sur la colonne de direction (3), un actionneur de direction (15) agissant sur les roues dirigées (11) par l'intermédiaire d'un boîtier de direction et d'une barre d'accouplement (13) et un appareil de commande,
**caractérisée en ce que**
l'appareil de commande est un appareil de commande selon la revendication 19.

**21.** Direction par câbles selon la revendication 20,
**caractérisée en ce que**
le boîtier de direction est un boîtier de direction hydraulique comprenant une soupape de barre de torsion (23).

**22.** Direction par câbles selon la revendication 20 ou 21,
**caractérisé en ce que**
le moteur de volant (9) agit sur le volant (1) par l'intermédiaire d'une boîte de vitesses.

*Fig. 1*

*Fig. 2*

*Fig. 3*

59 Spurführungs-regler

61 Fahrdynamik-regler

Geschwindigkeits-abhängige Übersetzung

$\delta_K$

$v$ $a_y$ $\dot{\psi}$

$v$ $\delta_{LR}$

$\delta_{LR,var,1}$ $\delta_{LR,var,2}$ $\delta_{LR,soll}$

A B

$$\delta_{LR,soll}$$

$$\delta_{Ritzel}$$

$$\times$$

$$Ki$$

$$Ki$$

$$\frac{T}{z-1}$$

69

$$\delta_{VA,soll,1}$$

67

*Fig. 4*